# EUROPÄISCHE PATENTSCHRIFT

(11) **EP 2 335 900 B1**
(45) Veröffentlichungstag und Bekanntmachung des Hinweises auf die Patenterteilung: **13.05.2020**
(21) Anmeldenummer: 10192426.4
(22) Anmeldetag: 24.11.2010
(51) Int. Cl.: B29C 44/12

(54) **Verfahren zum Herstellen eines Formteils**
Method for producing a moulded interior panel
Procédé de fabrication d'une pièce de formage

(30) Priorität: 17.12.2009 DE 102009054893
(43) Veröffentlichungstag der Anmeldung: 22.06.2011
(73) Patentinhaber: Bayerische Motoren Werke AG, 80788 München (DE)
(72) Erfinder: Lesser, Roman, 84030, Ergolding (DE); Huynh, Dienhung, 84036, Landshut (DE); Franz, Gunter, 49082, Osnabrück (DE); Lause, Jürgen, 49205, Hasbergen (DE)

(56) Entgegenhaltungen:
- EP-A2- 1 862 290
- DE-A1- 4 005 624
- DE-A1- 10 140 873
- DE-A1-102005 036 835
- JP-A- 58 001 533
- US-A- 5 709 925
- US-A1- 2008 233 359

## Beschreibung

Die vorliegende Erfindung betrifft ein Verfahren zum Herstellen eines einen Haut/Schaum/Träger-Verbund aufweisenden Formteils für den Innenraum eines Fahrzeuges. Ein solches gattungsgemäßes Verfahren ist aus der Druckschrift EP 1 862 290 A2 bekannt.

Formteile im Innenraum eines Fahrzeuges, insbesondere eines Kraftfahrzeuges, wie beispielsweise Armaturentafeln bzw. Instrumententafeln oder Fahrzeuginnenausstattungsteile, wie Innenverkleidungen, Türbrüstungen bzw. Türseitenverkleidungen, Tür- und Säulenverkleidungen, Mittelkonsolen, Handschuhkasten-Deckel oder Griffe, sind häufig aus einem so genannten Haut-Schaum-Träger-Verbund ausgebildet. Zwischen einer Haut, die die zugängliche, sicht- und fühlbare Außenseite der Formteile bildet, und einem Träger bzw. Trägerelement ist eine Schaumschicht vorgesehen. Bei der Herstellung derartiger Formteile wird ein flüssiger, Schaum bildender Kunststoff, insbesondere ein Halbhart-Schaum, in einen Zwischenraum zwischen der Haut und dem Träger eingetragen. Der eingetragene, Schaum bildende Kunststoff füllt den Zwischenraum zwischen der Haut und dem Träger gleichmäßig aus. Während einer anschließenden chemischen Reaktion verfestigt sich der Schaum bildende Kunststoff, wobei er sich in der Regel etwas ausdehnt. Um eine weiche Druckhaptik der Haut bzw. der Hautoberfläche zu erhalten, beträgt die Dicke der Schaumschicht vorzugsweise einige Millimeter. Während des Hinterschäumens ist der Träger bzw. ist das Trägerelement in einem ersten Schäumwerkzeugteil und die Haut in einem zweiten Schäumwerkzeugteil gehalten. Das zweite Schäumwerkzeugteil, an dessen Kontur die Haut anliegt, bildet beim Hinterschäumen in der Regel das unten liegende Schäumwerkzeugteil, so dass der eingetragene Kunststoff, vorzugsweise ein reaktives Polyurethan, sich sicher an die Kontur der Haut anpasst, insbesondere in Vertiefungen eindringt. Der Träger wird beim Einschäumen des flüssigen, Schaum bildenden Kunststoffes durch das erste Schäumwerkzeugteil gehalten. Das erste Schäumwerkzeugteil ist vorzugsweise oberhalb der Haut angeordnet und hält den Träger gegen den Schaumdruck fest.

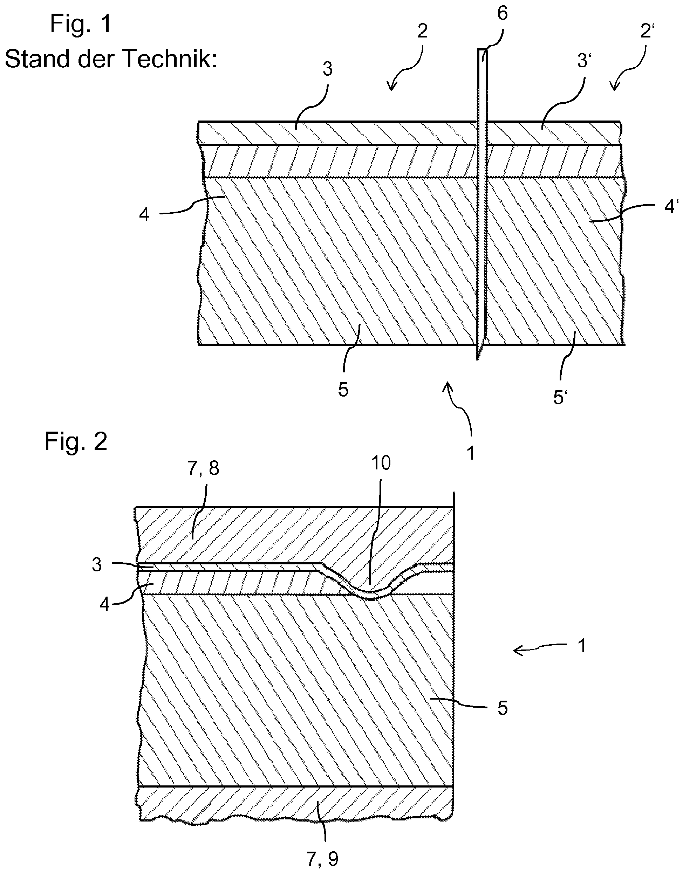

Bei diesem zuvor geschilderten Herstellungsverfahren für Formteile für ein Fahrzeug, insbesondere für ein Kraftfahrzeug, werden Bereiche, in denen später Durchbrüche, wie beispielsweise Durchbrüche für Lüftungsblenden, Instrumente, etc., erforderlich sind, wie die restlichen Bereiche der Formteile vollflächig hinterschäumt. In einem Folgeschritt werden diese nicht erforderlichen Bereiche durch eine geeignete Beschnitttechnologie, beispielsweise durch Fräsen oder Stanzen, als Durchbrüche dargestellt, das heißt ausgefräst oder ausgestanzt. Dies ist in Fig. 1 dargestellt. Das Stanzwerkzeug 6 trennt den überschüssigen Bereich 2' des Haut/Schaum/Träger-Verbundes 2 des Formteils 1 ab, um Durchbrüche in dem Formteil 1 zu erzeugen. Die Haut 3', das Schaummaterial 4' und der Träger 5' des überschüssigen Bereiches 2' des Haut/Schaum/Träger-Verbundes 2 sind als Abfall zu entsorgen.

Dieses Herstellungsverfahren für Formteile für den Innenraum eines Fahrzeuges, insbesondere für den Innenraum eines Kraftfahrzeugs, weist mehrere Nachteile aus. Es sind nachfolgende Arbeitsschritte erforderlich, um die überschüssigen Bereiche freizustellen, zum Beispiel durch ein Stanzverfahren. Neben den zeitaufwendigen Arbeitsschritten sind entsprechende Beschnitttechnologien bzw. -geräte erforderlich, die einen nachteiligen Kostenfaktor darstellen. Der Beschnittabfall stellt sich dementsprechend als Haut/Schaum/Träger-Verbund dar und muss ebenfalls entsorgt bzw. recycelt werden. Auch hierdurch entstehen nachteiligerweise Kosten für die Entsorgung bzw. das Recycling der entfernten Haut/Schaum/Träger-Verbunde. Ebenso fallen erhöhte Materialkosten für die Bereiche an, die anschließend als Abfall entsorgt werden müssen. Das heißt, es wird bei dem derzeit bekannten Herstellungsverfahren für Formteile für den Innenraum eines Fahrzeuges, insbesondere für den Innenraum eines Kraftfahrzeugs, für alle Bereiche des Haut/Schaum/Träger-Verbundes unnötig viel Material eingesetzt. Es wird insbesondere unnötig viel Trägermaterial, insbesondere Spritzgussmaterial, als auch unnötig viel Schaum bildender Kunststoff eingesetzt.

Aufgabe der Erfindung ist es daher, ein zuvor erwähntes Formteil für ein Fahrzeug, insbesondere für ein Kraftfahrzeug, möglichst einfach, mit geringem zeitlichen Fertigungsaufwand und möglichst wenig Fertigungsmaterial zu erzeugen. Insbesondere soll bei der Herstellung eines derartigen Formteils vermieden werden, dass unnötiger Verschnitt produziert wird.

Diese Aufgabe wird erfindungsgemäß durch ein Verfahren zur Herstellung eines einen Haut/Schaum/Träger-Verbund aufweisenden Formteils für den Innenraum eines Fahrzeuges gemäß Patentanspruch 1 gelöst. Weitere Merkmale und Details der Erfindung ergeben sich aus den Unteransprüchen, der Beschreibung sowie den Zeichnungen. Merkmale und Details die im Zusammenhang mit dem Träger beschrieben sind, gelten dabei selbstverständlich auch im Zusammenhang mit dem Schäumwerkzeugteil, dem Schäumwerkzeug und dem Verfahren, und jeweils umgekehrt.

Ein Träger eines Haut/Schaum/Träger-Verbundes eines Formteils im Inneren eines Fahrzeuges, insbesondere eines Kraftfahrzeuges ist zumindest bereichsweise verformbar ausgebildet. Durch einen zumindest bereichsweise verformbar ausgebildeten Träger kann die Haut durch geeignete Maßnahmen in den Träger eingedrückt beziehungsweise eingepresst werden, wodurch eine sichere Dichtung für den nachfolgend eingetragenen Schaum gewährleistet werden kann. Um einen Haut/Schaum/Träger-Verbund herzustellen, wird der Träger beziehungsweise das Trägerelement an ein erstes Schäumwerkzeugteil eines Schäumwerkzeuges und die Haut an ein zweites Schäumwerkzeugteils des Schäumwerkzeuges angelegt. In das zweite Schäumwerkzeugteil, welches die Haut beinhaltet, wird ein flüssiger, Schaum bildender Kunststoff eingetragen. Nach erfolgtem Eintrag werden die beiden Schäumwerkzeugteile aufeinander zubewegt beziehungsweise zugefahren. Das zweite Schäumwerkzeugteil weist zumindest einen Konturvorsprung auf. Die Haut legt sich beim Anlegen an das zweite Schäumwerkzeugteil an den Konturvorsprung an. Beim Schließen der beiden Schäumwerkzeugteile wird die an dem zweiten Schäumwerkzeugteil anliegende Haut im Bereich des zumindest einen Konturvorsprungs in den Träger beziehungsweise in das Trägermaterial eingedrückt, so dass die Haut abdichtend am Träger sitzt. Eine ausreichend gute Abdichtung wird dadurch erlangt, dass der Träger zumindest bereichsweise verformbar ausgebildet ist, das heißt zumindest an bestimmten Stellen nachgibt. Würde der Träger nicht nachgeben beziehungsweise nicht komprimiert werden können, so würden die Schäumwerkzeugteile des Schäumwerkzeuges nicht ausreichend genug zugefahren werden können und/oder die Haut könnte beschädigt werden. Eine sichere Dichtung zwischen der Haut und dem Träger entsteht erst dadurch, dass die Haut mittels des zweiten Schäumwerkzeugteils in den Träger eingedrückt wird.

Die Haut des Haut/Schaum/Träger-Verbundes des Formteils bildet die dem Innenraum des Fahrzeuges zugewandte Seite und der Träger Haut/Schaum/Träger-Verbundes des Formteils bildet die dem Innenraum des Fahrzeuges abgewandte Seite des Haut/Schaum/Träger-Verbundes. Der Schaum ist zwischen der Haut und dem Träger angeordnet.

Vorteilhafterweise ist der gesamte Träger verformbar ausgebildet. Dies erleichtert die Herstellung des Trägers. Dabei kann der Träger bereichsweise oder vollständig plastisch verformbar ausgebildet sein. Gemäß einer besonders bevorzugten Weiterentwicklung der Erfindung kann bei dem Träger vorgesehen sein, dass dieser zumindest bereichsweise elastisch verformbar ausgebildet ist. Durch die elastische Verformbarkeit des Trägers wird gewährleistet, dass die Dichtung zwischen der Haut und dem Träger dauerhaft ist. Vorteilhafterweise ist der gesamte Träger elastisch ausgebildet bzw. weist zumindest eine elastische Schicht auf.

Der Träger ist aus einem Thermoplast, insbesondere aus Polypropylen, ausgebildet und wird durch ein Spritzgießverfahren hergestellt. Ein Träger aus einem derartigen aufgeschäumten Material weist eine poröse Struktur, ähnlich wie bei einem Knochen, auf. Durch die spezielle aufgeschäumte Struktur des Trägers, kann dieser leicht komprimiert werden, wenn die Haut durch das zweite Schäumwerkzeugteil in den Träger eingedrückt wird.

Ein zuvor erwähnter Träger ermöglicht eine einfache und sichere Abdichtung in vordefinierten Bereichen zwischen der Haut und dem Träger, so dass ein anschließend eingetragener Schaum bildender Kunststoff an diesen Stellen begrenzt wird. Durch die verformbare Gestaltung des Trägers ermöglicht dieser, dass nicht mehr Schaum als notwendig in die Kavität zwischen der Haut und dem Träger eingetragen werden muss. Das heißt Stellen, in denen Durchbrüche oder Aussparungen in einem Formteil vorgesehen sind, werden beim Schließen der Schäumwerkzeugteile mittels der speziellen Ausgestaltung des Trägers, der Haut und der speziellen Ausgestaltung des Schäumwerkzeugteils, an dem die Haut anliegt, abgedichtet.

Der Träger ist aus wenigstens zwei Schichten unterschiedlicher Dichte ausgebildet, wobei eine erste Schicht an der Oberseite des Trägers eine höhere Dichte aufweist, als zumindest eine zweite Schicht. Die Oberseite des Trägers ist die Seite, die dem eingespritzten Schaum zugewandt ist. Die dichtere Oberseite gewährleistet, dass der Träger beim Eindrücken der Haut in den Träger nicht beschädigt wird. Die darunter liegende Schicht weist eine geringere Dichte auf und ist daher nachgiebiger ausgebildet. Diese nicht so kompakte Schicht ermöglicht, dass der Träger beim Eindrücken der Haut komprimiert werden kann. Ein derartig ausgebildeter Träger wird dadurch hergestellt, indem in ein Formwerkzeug ein Thermoplast eingespritzt wird. Das Formwerkzeug stellt vorzugsweise die Negativform des ersten Schäumwerkzeugteils dar. Nach dem Eintragen des Thermoplasts in das Formwerkzeug kühlen die Randschichten, das heißt die Schichten, die direkt an dem Formwerkzeug anliegen, schnell ab und können sich dadurch nicht so stark ausdehnen, wie der Kern des eingespritzten Thermoplasts. Diese nicht so stark ausgedehnten Schichten bilden die festere bzw. dichtere Oberseite des Trägers, wenn dieser an das erste Schäumwerkzeugteil angelegt wird.

Ein Schäumwerkzeugteil eines Schäumwerkzeuges zum Herstellen eines Haut/Schaum/Träger-Verbundes eines Formteils im Innenraum eines Fahrzeuges, insbesondere eines Kraftfahrzeugs, ist zur Anlage der Haut des Haut/Schaum/Träger-Verbundes ausgebildet, wobei das Schäumwerkzeugteil an der Seite, an der die Haut angeordnet ist, wenigstens einen Konturvorsprung zur Abdichtung der Haut gegenüber dem Träger aufweist. Die durch ein formgebendes Verfahren hergestellte Haut wird in beziehungsweise an das Schäumwerkzeugteil angelegt, wobei sich die Haut an die Kontur des Schäumwerkzeugteils und damit auch an den wenigstens einen Konturvorsprung anpasst. Der wenigstens eine Konturvorsprung kann verschiedenartig ausgebildet sein. Er ist insbesondere dadurch gekennzeichnet, dass er aus der Oberfläche beziehungsweise Wandung des Schäumwerkzeugteils herausragt. Der wenigstens eine Konturvorsprung weist insbesondere eine aufgewölbte beziehungsweise deichartige Form auf. Dabei kann der Konturvorsprung beispielsweise als eine gerade, gebogene oder schlangenlinienförmige Aufwölbung ausgebildet sein. Vorzugsweise ist der wenigstens eine Konturvorsprung an allen Stellen gleich hoch beziehungsweise gleich. Hierdurch ist gewährleistet, dass die an dem Konturvorsprung anliegende Haut beim Schließen der Schäumwerkzeugteile, an denen die Haut beziehungsweise der Träger anliegt, gleichmäßig in den Träger eingedrückt wird. Hierdurch wird im Bereich des wenigstens einen Konturvorsprungs einer sichere Abdichtung zwischen der Haut und dem Träger geschaffen. Durch das in die Kavität eingetragene Schaum bildende Kunststoffmaterial wird die Haut mit dem Träger verbunden.

Ein derartig ausgebildetes Schäumwerkzeugteil ermöglicht eine schnelle und einfache Abdichtung zwischen der Haut und dem Träger eines Haut/Schaum/Träger-Verbundes. Der eingetragene Kunststoff wird im Bereich des Konturvorsprungs beziehungsweise der Abdichtungen begrenzt, so dass nicht unnötig viel Kunststoff in die Kavität zwischen der Haut und dem Träger eingetragen werden muss. Hierdurch kann im Vergleich zu dem bislang bekannten Herstellungsverfahren für einen Haut/Schaum/Träger-Verbund eines Formteils für den Innenraum eines Fahrzeuges, insbesondere eines Kraftfahrzeugs, Schäummaterial, das heißt einzutragender Kunststoff, eingespart werden. Ein nachträgliches, zeitlich und monetär aufwändiges Ausstanzen oder Ausfräsen von überschüssigen Bereichen des Haut/Schaum/Träger-Verbundes entfällt. Durch die spezielle Ausgestaltung des Schäumwerkzeugteils, an dem die Haut anliegt, kann bei der Herstellung eines Formteils für den Innenraum eines Fahrzeuges vermieden werden, dass unnötiger Verschnitt produziert wird.

Bei dem Schäumwerkzeugteil kann vorgesehen sein, dass der der wenigstens eine Konturvorsprung eine in sich geschlossene Form aufweist. Da Formteile für den Innenraum eines Fahrzeuges, insbesondere Armaturentafeln, Innenverkleidungsteile, Mittelkonsolen, Handschuhkasten-Deckel, Griffe, Tür- oder Säulenverkleidungen, häufig in bestimmten Bereichen Durchbrüche aufweisen, ist der wenigstens eine Konturvorsprung vorzugsweise in sich geschlossen. Das bedeutet der Konturvorsprung weist vorzugsweise eine umlaufende Form auf. Diese kann je nach Ausgestaltung des Durchbruches ausgebildet sein. Das heißt der Konturvorsprung kann beispielsweise kreisrund, ellipsenförmig, mehreckig oder geschwungen ausgebildet sein.

Bevorzugt ist ferner ein Schäumwerkzeugteil, bei dem der wenigstens eine Konturvorsprung eine radienartige und/oder eine rippenartige und/oder eine V-förmige Form aufweist. Der weningstens eine Konturvorsprung weist keine scharfen Kanten auf, sondern ist in allen Bereichen abgerundet. Hierdurch ist gewährleistet, dass die an den Konturvorsprung anliegende Haut, insbesondere beim Einpressen in den Träger, nicht reißt. Insbesondere ist die Spitze des wenigstens einen Konturvorsprungs rund oder gewölbt ausgebildet.

Ein Schäumwerkzeug zum Herstellen eines Haut/Schaum/Träger-Verbundes eines Formteils im Innenraum eines Fahrzeuges, insbesondere eines Kraftfahrzeugs, weist ein erstes Schäumwerkzeugteile zur Anlage des Trägers des Haut/Schaum/Träger-Verbundes und ein zweites Schäumwerkzeugteils zur Anlage der Haut des Haut/Schaum/Träger-Verbundes auf, wobei das erste und das zweite Schäumwerkzeugteile zur Bildung einer ausschäumbaren Kavität zwischen der Haut und dem Träger aufeinander zu bewegbar sind und bei dem das zweite Schäumwerkzeugteile wie oben beschrieben ausgebildet ist. Das zweite Schäumwerkzeugteil des Schäumwerkzeuges weist an der Seite, an der die Haut anordbar ist, wenigstens einen Konturvorsprung, insbesondere eine Aufwölbung, zu Abdichtung der Haut gegenüber dem Träger auf.

Ein derartiges Schäumwerkzeug ermöglicht die einfache und schnelle Herstellung eines Haut/Schaum/Träger-Verbundes eines Formteils für den Innenraum eines Fahrzeuges. Der Träger des Haut/Schaum/Träger-Verbundes kann bereits werkzeugfallend ausgespart sein. Das bedeutet, der Träger weist bereits in den Bereichen, wo später Durchbrüche im Formteil vorgesehen sein sollen, entsprechende Aussparung auf. Durch die spezielle Ausgestaltung des Schäumwerkzeuges, insbesondere des zweiten Schäumwerkzeugteils, kann die an dem zweiten Schäumwerkzeugteils anliegende Haut in Verbindung mit dem Träger dem geschlossenen Zustand des Schäumwerkzeuges sicher gegen den Schaum abdichten. Durch das Verpressen der Haut auf den Träger, welcher durch ein Thermoplast-Schaumspritzguss-Verfahren hergestellt worden ist, kann die Haut geringfügig in die Schaumstruktur des Trägers eingedrückt werden. Dementsprechend können fertigungstechnisch bedingte Wandstärkentoleranzen der Haut durch das Eindrücken der Haut in den Träger kompensiert werden, die andernfalls einen erheblichen Abstimmungsaufwand am Schäumwerkzeug erzeugen würden.

Ein derartiges Schäumwerkzeug, insbesondere ein Schäumwerkzeug, bei dem zweiten Schäumwerkzeugteils wenigstens einen Konturvorsprung aufweist, ermöglicht, dass nachfolgende Beschnitttechnologien, wie beispielsweise Stanz- oder Fräsverfahren, im Bereich der Hautabdichtung nicht erforderlich sind. Durch das spezielle Schäumwerkzeug kann in Verbindung mit dem zumindest bereichsweise verformbar ausgebildeten Träger eine Einsparung von Materialkosten, insbesondere des Trägermaterials sowie des eingespritzten Kunststoffmaterials, erreicht werden.

Gemäß der Erfindung wird die Aufgabe durch ein Verfahren zur Herstellung eines einen Haut/Schaum/Träger-Verbund aufweisenden Formteils für den Innenraum eines Fahrzeuges, insbesondere für den Innenraum eines Kraftfahrzeugs, gelöst, wobei das Verfahren durch folgende Verfahrensschritte gekennzeichnet ist:
a) ein Träger, der gemäß dem ersten Aspekt der Erfindung ausgebildet ist, wird an ein erstes Schäumwerkzeugteil eines Schäumwerkzeuges, insbesondere formschlüssig, angelegt,
b) eine Haut wird an ein zweites Schäumwerkzeugteil eines Schäumwerkzeuges, insbesondere formschlüssig, angelegt, wobei das zweite Schäumwerkzeugteil wie oben beschrieben ausgebildet ist,
c) das erste und das zweite Schäumwerkzeugteil werden zur Bildung einer Kavität zwischen der Haut und dem Träger aufeinander zu bewegt, wobei der wenigstens eine Konturvorsprung des zweiten Schäumwerkzeugteils die Haut im Bereich des wenigstens eines Konturvorsprungs in den Träger abdichtend eindrückt,
d) ein flüssiger, Schaum bildender Kunststoff wird vor dem Aufeinanderzubewegen der Schäumwerkzeugteile in das offene Schäumwerkzeug oder nach dem Aufeinanderzubewegen der Schäumwerkzeugteile in die entstandene Kavität eingetragen, füllt die Kavität zwischen der Haut und dem Träger aus und härtet anschließend aus.

Bei dem Verfahren wird der Träger in einem Trägerformwerkzeug mittels eines Thermoplast-Schaumspritzgießverfahrens hergestellt. Der Träger, bei dem vorzugsweise vordefinierte Durchbrüche werkzeugfallend ausgespart sind, wird in beziehungsweise an ein erstes Schäumwerkzeugteil eines Schäumwerkzeuges, welches vorzugsweise gemäß dem dritten Aspekt der Erfindung ausgebildet ist, angelegt. Dabei wird der zuvor hergestellte Träger derart an das erste Schäumwerkzeugteil des Schäumwerkzeuges angelegt, dass die Trägerrückseite an das Schäumwerkzeugteil des Schäumwerkzeuges angelegt wird. Vorzugsweise weist der Träger, der durch ein Spritzgießverfahren hergestellt worden ist, an einer Seite die Form des ersten Schäumwerkzeugteils auf. Hierdurch kann der Träger formschlüssig in das erste Schäumwerkzeugteil eingelegt werden. Der Träger ist zumindest bereichsweise verformbar, insbesondere elastisch verformbar, ausgebildet. Die Haut, die die im Innenraum des Fahrzeuges zugängliche Seite des Formteils bildet, wird an das zweite Schäumwerkzeugteil des Schäumwerkzeuges, insbesondere formschlüssig angelegt. Die

Haut kann zuvor in einem Formwerkzeug durch einen Spritzgießverfahren oder ein sonstiges Gießverfahren hergestellt werden. Die Haut ist insbesondere aus einem Polyurethan ausgebildet. Die Haut kann aber beispielsweise auch aus thermoformbarer Folie oder Leder ausgebildet sein. Das zweite Schäumwerkzeugteil des Schäumwerkzeuges weist vorzugsweise wenigstens einen Konturvorsprung, der insbesondere als eine rippenartige Aufwölbung ausgebildet ist, auf.

Zur Herstellung einer Abdichtung zwischen der Haut und dem Träger werden das erste und das zweite Schäumwerkzeugteils des Schäumwerkzeuges aufeinander zugefahren. Dabei wird nur im Bereich des wenigstens einen Konturvorsprungs die an dem wenigstens einen Konturvorsprung anliegende Haut in denen Träger eingedrückt. Dies wird insbesondere dadurch ermöglicht, dass der Träger komprimierbar ausgebildet ist. Hierdurch wird eine sichere Abdichtung zwischen der Haut und dem Träger geschaffen. Im geschlossenen Zustand des Schäumwerkzeuges entsteht ein Spalt bzw. eine Kavität zwischen der Haut und dem Träger mit einem vordefinierten Abstand. Nach dem Schließen des Schäumwerkzeuges und der Abdichtung der Haut und des Trägers im Bereich des wenigstens einen Konturvorsprungs des zweiten Schäumwerkzeugteils, füllt der flüssige, Schaum bildende Kunststoff den Spalt bzw. die Kavität zwischen der Haut und dem Träger. Der eingebrachte Schaum, der anfangs ähnlich flüssig ist wie Wasser, kann im Bereich des wenigstens einen Konturvorsprungs beziehungsweise im Bereich der wenigstens einen Abdichtung nicht austreten. Der eingebrachte Schaum expandiert, wobei die Luft, die in den Spalt vorhanden ist, an vordefinierten Stellen, aber nicht im Bereich des wenigstens einen Konturvorsprungs, aus dem Spalt herausgedrückt wird. Dies kann beispielsweise durch aufblasbare Dichtungen realisiert werden. Der in den Spalt eingebrachte Schaum reagiert in einer chemischen Reaktion und härtet nach einer bestimmten Zeit aus, wobei er die Haut und den Träger miteinander verbindet. Durch das Eindrücken der Haut in denen verformbar am Träger wird eine gute Abdichtung erzielt, auch dann wenn die Haut selbst nicht immer gleich dick ist. Der nachgiebig ausgebildete Träger ermöglicht einen Toleranzausgleich. Der wenigstens eine Konturvorsprung ist 1:1 in der Haut zu sehen.

Das Einbringen des flüssigen, Schaum bildenden Kunststoffs kann zum einen vor dem Schließen der Schäumwerkzeugteile und zum anderen nach dem Schließen der Schäumwerkzeugteile erfolgen. Im ersten Fall wird der flüssige, Schaum bildende Kunststoff in die Schäumwerkzeugteile des offenen Schäumwerkzeuges, das heißt auf die Haut und/oder den Träger aufgebracht, insbesondere aufgespritzt. Anschließend werden die Schäumwerkzeugteile unter Bildung eines Spaltes geschlossen. Dabei wird der Schaum bildende Kunststoff zusammengepresst und füllt dadurch den entstandenen Spalt zwischen der Haut und dem Träger vollständig aus. Überflüssiger Schaum bildender Kunststoff wird an den Seiten der Schäumwerkzeugteile, insbesondere an vordefinierten Stellen, aus der Spalt bzw. der Kavität herausgedrückt. Im Bereich des wenigstens einen Konturvorsprungs des zweiten Schäumwerkzeugteils wird die Haut in den Träger abdichtend eindrückt, so dass dort kein Schaum bildender Kunststoff austreten kann.

Im zweiten Fall werden die Schäumwerkzeugteile unter Bildung eines Spaltes aufeinander zubewegt, das heißt geschlossen, und anschließend wird der flüssige, Schaum bildende Kunststoff in den entstandenen Spalt bzw. die entstandene Kavität zwischen der Haut und dem Träger eingebracht, insbesondere eingespritzt.

Durch ein derartiges Herstellungsverfahren kann ein Formteil, insbesondere eine Armaturentafel beziehungsweise eine Instrumententafel, eine Seiten-, eine Tür- oder eine Säulenverkleidung, eine Mittelkonsole, ein Handschuhkasten-Deckel, ein Griff oder ein ähnliches Bauteil, welches im Innenraum eines Fahrzeuges, insbesondere eines Kraftfahrzeugs, vorgesehen ist, einfach und kostengünstig erstellt werden. Das Herstellungsverfahren ermöglicht, dass nicht mehr Material, insbesondere Schäummaterial, als notwendig benötigt wird. Gleiches gilt für das Trägermaterial, da der Träger bereits werkzeugfallend hergestellt werden kann, wobei der Träger bereits Durchbrüche aufweisen kann.

Durch das zuvor geschilderte Herstellungsverfahren kann ein Formteil, wie eine Instrumententafel, mit Durchbrüchen, wie beispielsweise für Lüftungsblenden oder Instrumenten, sehr einfach, schnell und materialsparend hergestellt werden. Nachträgliche Arbeitsschritte, wie Stanzen oder Fräsen, um diese überschüssigen Bereiche freizustellen, sind nicht erforderlich. Es entstehen keine Entsorgungskosten, da keine überschüssigen Bereiche des Haut/Schaum/Träger-Verbundes erzeugt werden. Es kann insbesondere nur so viel Spritzgussmaterial für den Träger und nur so viel Schaummaterial, vorzugsweise Halbhart-Schaum, verwendet werden, wie erforderlich.

Ihn den potentiellen Abfallbereichen des Haut/Schaum/Träger-Verbundes kann der Spritzgussträger bereits werkzeugfallend ausgespart werden. Um in dem später folgenden Schäumvorgang zu verhindern, dass der Schaum in diese ausgesparten Bereiche vordringt, werden diese Bereiche durch die beim Schließen des Formwerkzeuges erzeugten Abdichtungen zwischen der Haut und dem verformbar ausgebildeten Träger, abgedichtet. Insbesondere durch die radienartige Gestaltung des Konturvorsprungs des zweiten Schäumwerkzeugteils und damit der Haut, kann die Haut in Verbindung mit dem leicht komprimierbaren gegen den Schaum abdichten. Die Haut und der Träger werden hierbei von hinten durch das Schäumwerkzeug, das heißt durch die jeweiligen Schäumwerkzeugteile, hinterfüttert und somit unterstützt.

Durch das Verpressen der Haut auf den Träger, welcher vorteilhafterweise mit dem bekannten SGI-Verfahren, das heißt einem Thermoplast-Schaumspritzguß-Verfahren, hergestellt wird und somit eine schaumartige Struktur aufweist, wird die Haut geringfügig in die Schaumstruktur des Trägers eingedrückt. Dementsprechend können fertigungstechnisch bedingte Wandstärkentoleranzen der Haut durch dieses Eindrücken der Haut in den Träger kompensiert werden, die andernfalls einen erheblichen Abstimmungsaufwand zwischen Träger und Haut am Schäumwerkzeug erzeugen würden. Das zuvor beschriebene Verfahren ermöglicht im Zusammenspiel mit dem zuvor beschriebenen Schäumwerkzeug bzw. Schäumwerkzeugteil sowie dem zuvor beschriebenen Träger eine Reduzierung des Abstimmungsaufwandes, dass heißt des Feintouchierens, im Abdichtbereich, das heißt im Bereich der Durchbrüche, zwischen der Haut und dem Träger.

Die Erfindung wird nun anhand von Ausführungsbeispielen unter Bezugnahme auf die beiliegenden Zeichnungen näher erläutert. Es zeigen:
- Figur 1: einen Schnitt durch einen Haut/Schaum/Träger-Verbund eines Formteils für den Innenraum eines Fahrzeuges, das nach einem bekannten Herstellungsverfahren hergestellt worden ist,
- Figur 2: einen Schnitt durch ein vorteilhaftes Ausführungsbeispiel eines Haut/Schaum/Träger-Verbundes eines Formteils für den Innenraum eines Fahrzeuges, das nach dem erfindungsgemäßen Herstellungsverfahren hergestellt worden ist,
- Figur 3: eine perspektivische Ansicht auf eine Instrumententafel für ein Kraftfahrzeug, die nach dem erfindungsgemäßen Herstellungsverfahren hergestellt worden ist.

Elemente mit gleicher Funktion und Wirkungsweise sind in den Figuren 1 mit 3 jeweils mit denselben Bezugszeichen versehen.

Fig. 1 zeigt einen Schnitt durch einen Haut/Schaum/Träger-Verbund 2, 2' eines Formteils 1 für den Innenraum eines Fahrzeuges, das nach einem bekannten Herstellungsverfahren hergestellt worden ist. der überschüssige Bereich des Haut/Schaum/Träger-Verbundes 2' ist durch eine Beschnitttechnologie zu entfernen, um Durchbrüche in dem Formteil 1 zu erzeugen. Hierbei wird unnötig viel Material, insbesondere Schäummaterial, sowie Spritzgussmaterial für den Träger 5 benötigt.

In der Fig. 2 ist einen Schnitt durch ein vorteilhaftes Ausführungsbeispiel eines Haut/Schaum/Träger-Verbundes 2 eines Formteils 1 für den Innenraum eines Fahrzeuges, das nach dem erfindungsgemäßen Herstellungsverfahren hergestellt worden ist, dargestellt. Die Haut 3 ist an das zweite Schäumwerkzeugteil 9 des Schäumwerkzeuges 7 angelegt. Der Träger 5 ist an das erste Schäumwerkzeugteil 8 des Schäumwerkzeuges 7 angelegt. Das Schäumwerkzeug 7 befindet sich in der geschlossenen Position. Das zweite Schäumwerkzeugteil 9 weist einen Konturvorsprung 10 auf. Dieser Konturvorsprung 10 ist als Aufwölbung beziehungsweise Erhöhung ausgebildet. Die Haut 3 ist an das zweite Schäumwerkzeugteil 9 und insbesondere an den Konturvorsprung 10 des zweiten Schäumwerkzeugteils 9 angepasst. Das zweite Schäumwerkzeugteil 9 drückt die Haut 3 beim Schließen des Schäumwerkzeuges 7 in den verformbar ausgebildeten Träger 5 ein. Dadurch, dass der aufgeschäumte Träger 5 leicht komprimiert werden kann, wird eine absolut dichte Abdichtung zwischen der Haut 3 und dem Träger 5 erreicht. Nach der Abdichtung zwischen der Haut 3 und dem Träger 5 im Bereich des Konturvorsprungs 10 des zweiten Schäumwerkzeugteils 9 wird ein flüssiger, Schaum bildender Kunststoff 4 in den Spalt zwischen der Haut 3 und dem Träger 5 eingebracht, insbesondere eingespritzt. Der nach einer Reaktion ausgehärtete Schaum 4 verbindet die Haut 3 und dem Träger 5 miteinander. Die im Bereich des Trägers 5 eingepresste Haut 3 dichtete gegen den eingebrachten Schaum 4 ab. Auf diese Art und Weise wird nur so viel Schaum 4 in den Spalt zwischen der Haut 3 und dem Träger eingebracht beziehungsweise eingespritzt, wie erforderlich. Ein Verschnitt an Schaum 4 kann bei diesem Verfahren beziehungsweise durch die spezielle Ausgestaltung des zweiten Schäumwerkzeugteils 9 sowie des nachgiebig ausgebildeten Trägers 5 verhindert werden.

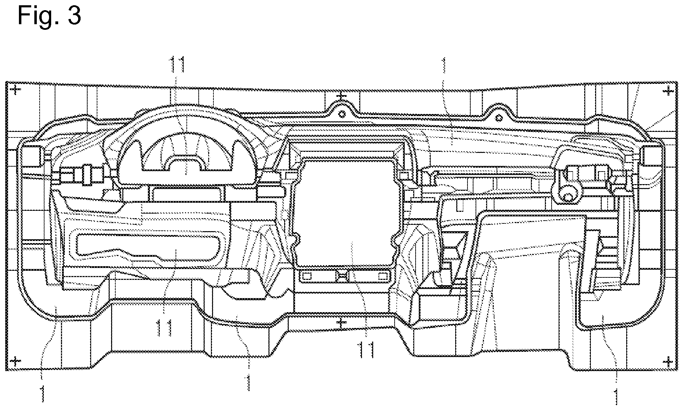

In der Fig. 3 ist eine Formteil 1 in Form einer Instrumententafel dargestellt. Das Formteil 1 wird derart hergestellt, dass die Durchbrüche 12 bereits während des Herstellprozesses erlangt werden. Ein nachträgliches Ausstanzen oder Ausfräsen ist nicht erforderlich.

### Bezugszeichenliste

- 1: Formteil
- 2: Haut/Schaum/Träger-Verbund
- 2': Haut/Schaum/Träger-Verbund
- 3: Haut
- 3': Haut
- 4: Schaum bildender Kunststoff / Schaum
- 4': Schaum bildender Kunststoff / Schaum
- 5: Träger / Trägerelement
- 5': Träger / Trägerelement
- 6: Stanzwerkzeug
- 7: Schäumwerkzeug,
- 8: erstes Schäumwerkzeugteil
- 9: zweites Schäumwerkzeugteil
- 10: Konturvorsprung
- 11: Durchbruch im Formteil

## Patentansprüche

1. Verfahren zum Herstellen eines einen Haut/Schaum/Träger-Verbund (2) aufweisenden Formteils (1) für den Innenraum eines Fahrzeuges, **gekennzeichnet durch** folgende Verfahrensschritte:
a) ein Träger (5) eines Haut/Schaum/Träger-Verbundes (2) eines Formteils (1) im Innenraum eines Fahrzeuges wird an ein erstes Schäumwerkzeugteil (8) eines Schäumwerkzeuges (7), insbesondere formschlüssig, angelegt, wobei der Träger (5) zumindest bereichsweise verformbar ausgebildet ist, um ein Eindrücken einer Haut (3) in den Träger (5) zu ermöglichen,
b) eine Haut (3) wird an ein zweites Schäumwerkzeugteil (9) des Schäumwerkzeuges (7) zum Herstellen eines Haut/Schaum/Träger-Verbundes (2) eines Formteils (1) im Innenraum eines Fahrzeuges, insbesondere formschlüssig, angelegt, wobei das zweite Schäumwerkzeugteil (9) zur Anlage der Haut (3) des Haut/Schaum/Träger-Verbundes (2) ausgebildet ist, wobei das Schäumwerkzeugteil (9) an der Seite, an der die Haut (3) anordenbar ist, wenigstens einen Konturvorsprung (10) zur Abdichtung der Haut (3) gegenüber dem Träger (5) aufweist und wobei zumindest die Spitze des wenigstens einen Konturvorsprungs (10) rund oder gewölbt ausgebildet ist,
c) das erste und das zweite Schäumwerkzeugteil (8, 9) werden zur Bildung einer Kavität zwischen der Haut (3) und dem Träger (5) aufeinander zu bewegt, wobei der wenigstens eine Konturvorsprung (10) des zweiten Schäumwerkzeugteils (9) die Haut (3) im Bereich des wenigstens eines Konturvorsprungs (10) in den Träger (5) abdichtend eindrückt,
d) ein flüssiger, Schaum bildender Kunststoff (4) wird vor dem Aufeinanderzubewegen der Schäumwerkzeugteile (8,9) in das offene Schäumwerkzeug (7) oder nach dem Aufeinanderzubewegen der Schäumwerkzeugteile (8,9) in die entstandene Kavität eingetragen, füllt die Kavität zwischen der Haut (3) und dem Träger (5) aus und härtet anschließend aus, **dadurch gekennzeichnet, dass** der Träger (5) aus wenigstens zwei Schichten unterschiedlicher Dichte ausgebildet ist, wobei eine erste Schicht an der Oberseite des Trägers (5) eine höhere Dichte aufweist, als die zumindest eine zweite Schicht, und dass der Träger (5) in einem Trägerformwerkzeug mittels eines Thermoplast-Schaumspritzgießverfahrens hergestellt wird und nach der Herstellung derart an das erste Schäumwerkzeugteil (8) des Schäumwerkzeuges (7) angelegt wird, dass die Trägerrückseite an das erste Schäumwerkzeugteil (8) des Schäumwerkzeuges (7) angelegt wird.

2. Verfahren nach Anspruch 1, **dadurch gekennzeichnet, dass** der Träger (5) zumindest bereichsweise elastisch verformbar ist.

3. Verfahren nach wenigstens einem der vorhergehenden Ansprüche 1 oder 2, **dadurch gekennzeichnet, dass** der Träger (5) aus einem Thermoplast, insbesondere aus Polypropylen, ausgebildet ist.

4. Verfahren nach Anspruch 1, **dadurch gekennzeichnet, dass** der wenigstens eine Konturvorsprung (10) des Schaumwerkzeugteils (9) eine in sich geschlossene Form aufweist.

5. Verfahren nach Anspruch 1 oder 4, **dadurch gekennzeichnet, dass** der wenigstens eine Konturvorsprung (10) des Schaumwerkzeugteils (9) eine radienartige und/oder eine rippenartige und/oder eine V-förmige Form aufweist.

6. Verfahren nach wenigstens Anspruch 1, **dadurch gekennzeichnet, dass** der Träger (5) werkzeugfallend hergestellt wird.

## Claims

1. A method for producing a moulded part (1) having a skin/foam/support composite (2) for the interior of a vehicle,
**characterised by** the following method steps:
a) a support (5) of a skin/foam/support composite (2) of a moulded part (1) in the interior of a vehicle is laid against a first foaming mould part (8) of a foaming mould (7), especially in a positive fit, wherein the support (5) is formed to be deformable at least in regions, in order to permit a skin (3) to be pressed into the support (5),
b) a skin (3) is laid against a second foaming mould part (9) of the foaming mould (7) to produce a skin/foam/support composite (2) of a moulded part (1) in the interior of a vehicle, especially in a positive fit, wherein the second foaming mould part (9) is formed for the skin (3) of the skin/foam/support composite (2) to lie against, wherein the foaming mould part (9), on that side on which the skin (3) can be arranged, has at least one contour protrusion (10) for sealing off the skin (3) from the support (5), and wherein at least the tip of the at least one contour protrusion (10) is formed round or curved,
c) the first and the second foaming mould part (8, 9) are moved towards each other to form a cavity between the skin (3) and the support (5), wherein the at least one contour protrusion (10) of the second foaming mould part (9) presses the skin (3) into the support (5) in sealing manner in the region of the at least one contour protrusion (10),
d) a liquid, foam-forming plastics material (4), prior to the foaming mould parts (8, 9) being moved towards each other, is introduced into the open foaming mould (7), or, once the foaming mould parts (8, 9) have been moved towards each other, is introduced into the resulting cavity, fills the cavity between the skin (3) and the support (5) and then hardens, **characterised in that** the support (5) is formed from at least two layers of different density, with a first layer on the upper side of the support (5) having a higher density than the at least a second layer, and **in that** the support (5) is produced in a support forming mould by means of a thermoplastic-material structural foam moulding process and once it has been produced is laid against the first foaming mould part (8) of the foaming mould (7) such that the reverse side of the support is laid against the first foaming mould part (8) of the foaming mould (7).

2. A method according to Claim 1, **characterised in that** the support (5) is elastically deformable at least in regions.

3. A method according to at least one of the preceding Claims 1 or 2, **characterised in that** the support (5) is formed from a thermoplastic material, especially from polypropylene.

4. A method according to Claim 1, **characterised in that** the at least one contour protrusion (10) of the foaming mould part (9) has a self-contained form.

5. A method according to Claim 1 or 4, **characterised in that** the at least one contour protrusion (10) of the foaming mould part (9) has a radius-like and/or a rib-like and/or a V-shaped form.

6. A method according to at least Claim 1, **characterised in that** the support (5) is produced off-tool.

## Revendications

1. Procédé de fabrication d'une pièce de formage (1) comportant une combinaison peau-mousse-support (2) pour l'habitacle d'un véhicule automobile,
procédé **caractérisé par** les étapes suivantes :
a) on applique le support (5) d'une combinaison peau/mousse/support (2) d'une pièce de formage (1) de l'habitacle d'un véhicule contre une première partie (8) d'un outil de moussage (7), notamment par une liaison par la forme, le support (5) étant réalisé de façon à être déformable au moins par zones pour permettre l'enfoncement de la peau (3) dans le support (5),
b) on applique une peau (3) contre une seconde partie (9) de l'outil de moussage (7) pour réaliser une combinaison peau/mousse/support (2) d'une pièce de formage (1) de l'habitacle d'un véhicule, notamment par une application par la forme, la seconde partie de l'outil de moussage (9) étant réalisée pour recevoir la peau (3) de la combinaison/mousse/support (2),
la partie d'outil de moussage (9) dont le côté recevant la peau (3), comporte au moins un contour en saillie (10) pour réaliser l'étanchéité de la peau (3) par rapport au support (5) et au moins la pointe de ce contour en saillie (10) a une forme ronde ou bombée,
c) on déplace la première et la seconde parties (8, 9) de l'outil de moussage l'une vers l'autre pour former une cavité entre la peau (3) et le support (5),
au moins ce contour en saillie (10) de la seconde partie d'outil (9) enfonce de manière étanche, la peau (3) de ce contour en saillie (10) dans le support (5),
d) on introduit une matière plastique (4) liquide, développant une mousse avant de rapprocher l'une de l'autre les parties (8, 9), dans cet outil de moussage (7) ouvert ou après avoir rapproché les parties (8, 9) de l'outil de moussage, dans la cavité, ce liquide remplissant la cavité entre la peau (3) et le support (5) pour ensuite durcir,
procédé **caractérisé en ce que**
le support (5) est réalisé avec au moins deux couches de densités différentes, une première couche sur le côté supérieur du support (5) qui a une densité plus forte qu'au moins une seconde couche, et
**en ce que** le support (5) est fabriqué dans un outil de formage de support à l'aide d'un procédé d'injection de mousse thermoplastique et après la réalisation, il est appliqué contre la première partie (8) de l'outil de moussage (7) pour que le côté arrière du support s'applique contre la première partie (8) de l'outil de moussage (7).

2. Procédé selon la revendication 1,
**caractérisé en ce que**
le support (5) est déformable élastiquement, au moins par zones.

3. Procédé selon l'une des revendications 1 et 2 précédentes, **caractérisé en ce que**
le support (5) est réalisé en une matière thermoplastique, notamment en polypropylène.

4. Procédé selon la revendication 1,
**caractérisé en ce qu'**
au moins un contour en saillie (10) de la partie d'outil de moussage (9) a une forme en soi fermée sur elle-même

5. Procédé selon la revendication 1 ou 4,
**caractérisé en ce qu'**
au moins un contour en saillie (10) de la partie d'outil de moussage (9) a une forme rayonnante et/ou une forme de nervure et/ou une forme en V.

6. Procédé selon au moins la revendication 1,
**caractérisé en ce que**
le support (5) est réalisé directement dans l'outil.
